# FASCICULE DE BREVET EUROPEEN

(11) **EP 0 784 270 B1**
(45) Date de publication et mention de la délivrance du brevet: **14.03.2001**
(21) Numéro de dépôt: 96402702.3
(22) Date de dépôt: 12.12.1996
(51) Int. Cl.: G06F 9/46

(54) **Procédé pour ordonnancer une pluralité de messages provenant respectivement d'une pluralité de sources, et système pour la mise en oeuvre de ce procédé**
Verfahren für die Ablauffolgeplanung von aufeinanderfolgenden Nachrichten aus einer Merhrzahl von Quellen, und System zur Ausführung dieses Verfahrens
Method to sequence messages from a plurality of sources, and a system to carry out said method

(30) Priorité: 28.12.1995 FR 9515655
(43) Date de publication de la demande: 16.07.1997
(73) Titulaire: CEGELEC, 92300 Levallois Perret (FR)
(72) Inventeur: Simatic, Michel, 91000 Evry (FR); Hurst-Frost, Edward, 92190 Meudon (FR); Junot, Laurent, 78960 Voisins Le Bretonneux (FR); Kohen, Bruno, 75012 Paris (FR); Orban, Olivier, 91460 Marcoussis (FR)
(74) Mandataire: Gosse, Michel

(56) Documents cités:
- 8TH INTERNATIONAL CONFERENCE ON DISTRIBUTED COMPUTING SYSTEMS, 13 - 17 Juin 1988, SAN JOSE, CALIFORNIA, USA, pages 439-446, XP000040660 S. NAVARATNAM ET AL.: "Reliable Group Communication in Distributed Systems"

## Description

L'invention concerne un procédé et un système pour ordonnancer une pluralité de messages provenant respectivement d'une pluralité de sources, et à destination d'une pluralité de processus applicatifs, de manière que tous les processus applicatifs reçoivent ces messages dans un même ordre. L'invention est applicable notamment dans un système informatique comportant une pluralité de processus applicatifs qui sont des répliques d'un même processus applicatif, la réplication étant réalisée par exemple pour améliorer la fiabilité du système.

Pour garantir la cohérence des données dans un tel système, il est connu de concevoir le logiciel de ce système de telle façon que tous les processus applicatifs se comportent comme des machines à états, c'est-à-dire tels que le comportement d'un processus applicatif ne dépend que des données appliquées à une entrée de ce processus, et de l'ordre d'entrée de ces données. Par conséquent, si on applique un même flot de données à toutes les répliques d'un même processus applicatif, on est certain que ces répliques ont un comportement cohérent. Les données fournies aux différents processus applicatifs d'un système proviennent généralement d'une pluralité de sources. On sait réaliser une source de données diffusant de manière fiable et ordonnée une suite de messages vers une pluralité de processus applicatifs destinataires de ces messages. Cette diffusion est dite fiable lorsqu'on est certain que tous les processus destinataires reçoivent chaque message diffusé. Cette diffusion est dite ordonnée lorsque l'on est certain que chaque processus destinataire reçoit la suite des messages dans un même ordre.

Lorsque plusieurs sources émettent respectivement des suites de messages à destination d'une pluralité de processus applicatifs, il n'y a aucune garantie que les messages seront reçus dans un même ordre par les différents processus destinataires, même si chaque source prise individuellement émet les messages de manière fiable et ordonnée. Il est envisageable d'utiliser un même protocole de diffusion fiable et ordonnée, pour les différentes sources. Cependant cette solution n'est pas toujours applicable, parce que, dans certains cas, on n'est pas maître du protocole de diffusion utilisé par certaines sources de données.

Le brevet US 5 363 503 décrit un procédé pour maintenir la cohérence des données dans un système informatique multiprocesseur dans lequel des processus applicatifs dits primaires sont dupliqués au moins une fois sous la forme d'un processus de secours pour protéger le système contre les conséquences d'une panne d'un processeur. Les processus font des actions durables tels qu'écrire sur un disque.

Ce procédé consiste à :
- munir chaque processeur d'une mémoire de messages et d'un compteur pour compter les accès en écriture dans cette mémoire de messages;
- mémoriser aussi des données décrivant les événements externes et leurs apparitions relativement à des événements internes;
- avant toute action durable, du processeur supportant un processus primaire, transmettre au processus de secours au moins certains des messages mémorisés, et les données décrivant des événements externes et leurs apparitions relativement à celles d'événements internes;
- en cas de défaillance du processeur supportant un processus primaire, faire traiter, par le processus de secours, les messages et les données qui lui ont été transmises, pour mettre le processus de secours en état pour remplacer le processus primaire.

Ce procédé a pour inconvénient d'être complexe à mettre en oeuvre.

Le but de l'invention est de proposer un procédé plus simple à mettre en oeuvre que ce procédé connu.

Un premier objet de l'invention est un procédé pour ordonnancer une pluralité de messages provenant respectivement d'une pluralité de sources et à destination d'une pluralité de processus applicatifs destinataires susceptibles de traiter les données de ces messages; chaque source diffusant une suite de messages de manière fiable et ordonnée; et chaque processus applicatif destinataire étant capable de rediffuser une suite de messages de manière fiable et ordonnée vers tous les processus applicatifs; caractérisé en ce que, pour que tous les processus applicatifs destinataires reçoivent ces messages dans un même ordre, il consiste à :
- choisir parmi les processus applicatifs un processus, appelé processus relais, unique et commun pour toutes les sources, les autres processus applicatifs étant appelés processus esclaves;
- rediffuser de ce processus relais vers tous les processus applicatifs y compris le processus relais, tous les messages diffusés par les sources;
- traiter dans le processus relais les données de tous les messages qu'il rediffuse;
- traiter dans les processus esclaves seulement les données des messages reçus via le processus relais, les données des messages reçus directement en provenance des sources n'étant pas traitées.

L'invention a aussi pour objet une variante de ce procédé, consistant à choisir une pluralité de processus relais, un processus relais étant choisi pour plusieurs sources, mais chaque source n'ayant qu'un seul processus relais, et tous les processus relais appliquant un même protocole de diffusion fiable et ordonnée.

Le procédé ainsi caractérisé assure une diffusion fiable et ordonnée, parce qu'une voie passe par le processus relais (ou les processus relais) qui assure la mise en série dans un ordre déterminé des messages provenant de différentes sources et leur rediffusion fiable.

Selon un mode de mise en oeuvre préférentielle, pour remédier à une défaillance du processus relais courant, il consiste, dans chaque processus esclave recevant un message, à :
- le mémoriser s'il n'a pas été déjà reçu par ce processus esclave via le processus relais;
- puis l'effacer s'il est reçu ensuite par ce processus esclave via le processus relais;
et consiste à rediffuser puis effacer tous les messages mémorisés et non encore effacés, si le processus relais courant a eu une défaillance et si le processus esclave considéré est devenu le nouveau processus relais commun pour toutes les sources.

Selon un mode de mise en oeuvre préférentiel, pour déterminer, dans un processus esclave, si un message diffusé par une source a déjà été reçu par ce processus esclave via le processus relais avant être reçu directement en provenance de cette source, il consiste à :
- décrémenter un compteur, propre à ce processus esclave et à cette source, chaque fois que le processus esclave reçoit un message provenant de cette source via le processus relais;
- et incrémenter ce compteur chaque fois que le processus esclave reçoit un message provenant de cette source directement;
- et conclure qu'un message diffusé par une source n'a pas déjà été reçu par ce processus esclave via le processus relais, si et seulement si la valeur algébrique du compteur est strictement positive.

Ce mode de mise en oeuvre est particulièrement simple puisqu'il permet de surveiller le bon fonctionnement d'un processus relais au moyen d'un seul compteur dans chacun des processus esclaves.

L'invention a aussi pour objet un système pour la mise en oeuvre de ce procédé.

L'invention sera mieux comprise et d'autres détails apparaîtront à l'aide de la description ci-dessous et des figures l'accompagnant :
- la figure 1 représente le schéma fonctionnel d'un exemple de système informatique et illustre un premier mode de mise en oeuvre du procédé selon l'invention;
- les figures 2 et 3 représentent l'organigramme des opérations de ce premier mode de mise en oeuvre;
- la figure 4 illustre une étape d'initialisation de ce premier exemple de mise en oeuvre;
- les figures 5 et 6 illustrent le cas où des processus applicatifs reçoivent un message directement en provenance d'une source, avant de recevoir le même message rediffusé par un processus relais;
- la figure 7 illustre le cas où le processus relais courant est défaillant et a été remplacé par un nouveau processus relais;
- la figure 8 représente le schéma fonctionnel d'un autre système informatique, et illustre un second mode de mise en oeuvre, où il y a plusieurs processus relais correspondant respectivement à plusieurs sources.

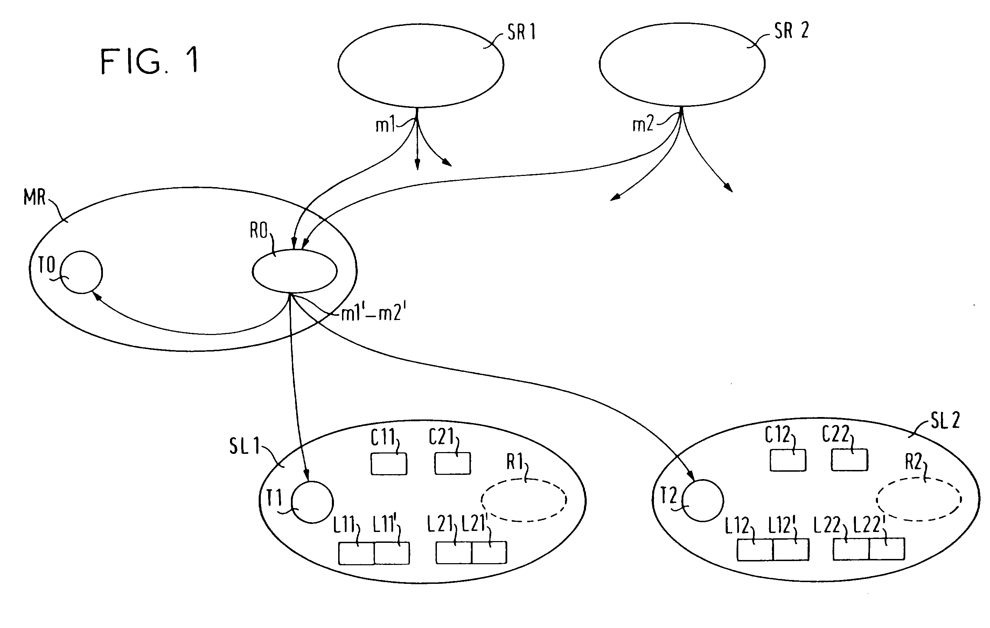

Le système informatique dont le schéma fonctionnel est représenté sur la figure 1 à titre d'exemple comporte deux sources de données SR1, SR2, et trois processus applicatifs destinataires de ces données, MR, SL1, SL2. Les sources de données SR1 et SR2 peuvent être des processus applicatifs. Chacune n'est pas destinataire des données émises par l'autre. Chacune des sources SR1, SR2 émet un flot de messages à destination de l'ensemble des processus applicatifs MR, SL1, SL2. Chaque source diffuse son flot de messages de manière fiable et ordonnée, mais il n'est pas possible, tout au moins dans cet exemple, de coordonner l'émission des deux flots de messages de telle façon qu'à la réception dans chacun des processus applicatifs MR, SL1, SL2, les deux flots de messages s'imbriquent dans un même ordre.

Les processus applicatifs MR, SL1, SL2 comportent respectivement des parties appelées traitements T0, T1, T2 pour traiter les données des messages reçus respectivement par ces processus applicatifs.

Chacun des processus applicatifs MR, SL1, SL2 comporte une partie, référencée respectivement R0, R1, R2, qui est capable de rediffuser une suite de messages de manière fiable et ordonnée vers tous les processus applicatifs, y compris la partie traitement située dans le même processus applicatif.

Selon le premier mode de mise en oeuvre du procédé selon l'invention, il consiste à choisir parmi les processus applicatifs MR, SL1, SL2 un processus, appelé relais, unique et commun pour toutes les sources SL1, SL2. Dans cet exemple le processus MR est choisi comme processus relais. Les autres processus applicatifs, SL1 et SL2, sont appelés processus esclaves. Ce processus relais MR a pour fonction de recevoir tous les messages diffusés par toutes les sources SR1, SR2 et de les rediffuser de manière fiable et ordonnée vers tous les processus applicatifs, y compris lui-même (à destination de sa partie traitement T0).

Dans le processus relais MR, la partie RO est activée pour rediffuser de manière fiable et ordonnée l'ensemble des messages que le processus relais MR est susceptible de recevoir. Les messages rediffusés sont identifiables comme tels. Dans les processus esclaves SL1 et SL2, les parties R1 et R2 sont inactives, mais peuvent être activées ultérieurement en cas de défaillance du processus relais courant MR, comme on le verra plus loin.

Selon une première caractéristique du procédé selon l'invention, il consiste à refuser de traiter dans les processus esclaves SL1, SL2 les données des messages reçus directement en provenance des sources SR1, SR2. Dans cet exemple, les sources SR1 et SR2 émettent respectivement un message m1 et un message m2 qui sont reçus dans un ordre quelconque par le processus applicatif MR. Ils sont reçus dans un ordre quelconque et indépendant du précédent, dans le processus applicatif SL1, et dans un ordre quelconque indépendant des précédents, dans le processus applicatif SL2.

Le processus relais MR reçoit les messages ml et m2 émis par les sources SR1 et SR2 dans l'ordre ml-m2 par exemple. La partie R0 réémet ces messages, sous la forme de messages référencés m1'-m2', de manière fiable et ordonnée, à destination du traitement T0 que comporte le processus relais MR, et à destination des processus esclaves SL1 et SL2, pour un traitement immédiat des données contenues dans ces messages, respectivement par les traitements T0, T1, T2. Le fait que les deux message m1 et m2 soient rediffusés par un même processus relais, MR, assure que tous les traitements T0, T1, T2 reçoivent dans un même ordre les répliques m1'-m2' des messages m1-m2 .

Des caractéristiques supplémentaires du procédé selon l'invention permettent de remédier à une éventuelle défaillance du processus applicatif utilisé comme relais. Dans cet exemple, ces caractéristiques supplémentaires mettent en oeuvre : deux compteurs C11, C21 et quatre registres appelés journaux, L11, L21, L11', L21' dans le processus esclave SL1; deux compteurs C12, C22, et quatre registres journaux L12, L22, L12', L22' dans le processus esclave SL2. Les compteurs C11, C12 et les registres journaux L11, L11', L12, L12', sont propres à la source SR1. Les compteurs C21, C22 et les registres journaux L21, L21', L22, L22' sont propres à la source SR2. Leur fonctionnement sera décrit plus loin. Les registres journaux L11', L12', L21', L22' ne sont utilisés que pendant une phase d'initialisation, et ne mémorisent que des messages reçus via le processus relais MR. Les registres journaux L11 et L12 sont utilisés pour stocker des messages émis par la source SR1, et reçus directement. Les registres journaux L21 et L22 sont utilisés pour stocker des messages émis par la source SR2, et reçus directement. Tous ces registres journaux sont des mémoires du type premier-entré-premier-sorti.

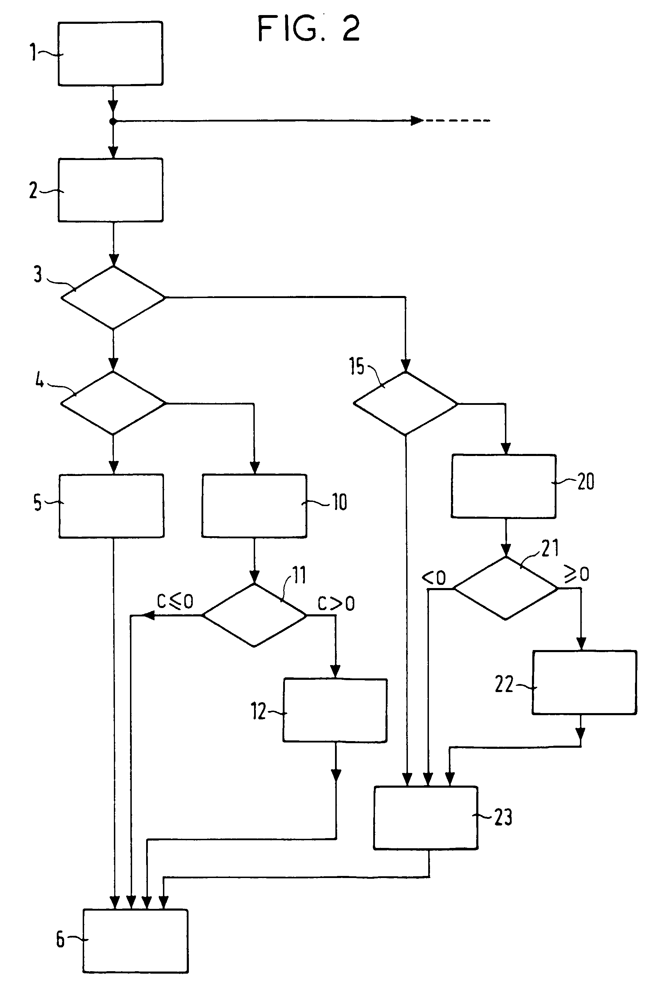

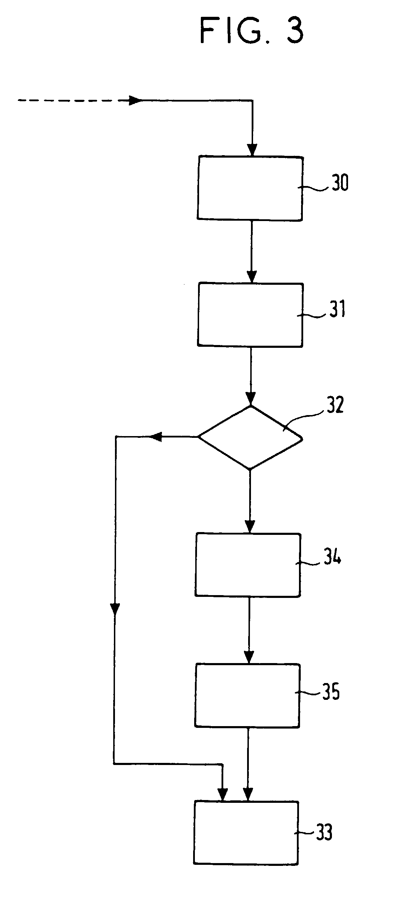

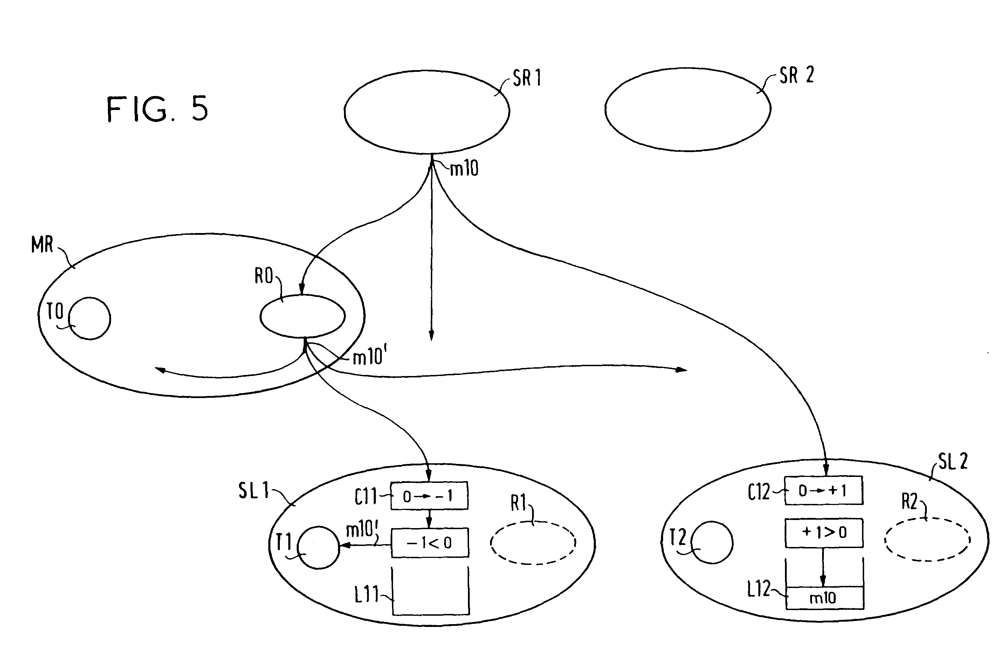

La figure 2 représente une première partie de l'organigramme des opérations réalisées dans le premier mode de mise en oeuvre. Cette première partie concerne le cas d'un fonctionnement normal du processus relais unique et commun à toutes les sources. La figure 3 représente une autre partie, comportant les opérations réalisées dans le cas où un processus applicatif esclave reçoit un message lui indiquant que le processus relais courant est défaillant. Les figures 5 à 7 illustrent ensuite ces opérations par des exemples.

Sur la figure 2, une opération 1 consiste à attendre un message. Une opération 2 consiste à recevoir un message autre qu'un message "relais défaillant". Une opération 3 consiste à déterminer l'origine du message reçu :
- Si l'opération 3 conclut que le message provient directement d'une source SR1, SR2, une opération 4 consiste à déterminer si le processus applicatif qui a reçu le message est processus relais ou processus esclave :
   -- Si le processus applicatif considéré est le processus relais MR, une opération 5 consiste à rediffuser le message reçu, de manière fiable et ordonnée, à destination de tous les processus applicatifs, y compris la partie traitement contenue dans le processus considéré. Puis une opération 6 consiste à attendre de nouveau un message.
   -- Si le processus considéré n'est pas le processus relais MR, une opération 10 consiste à incrémenter un compteur situé dans le processus considéré et correspondant à la source ayant émis le message considéré. Par exemple, le compteur C11 si le processus considéré est le processus esclave SL1 et si la source qui a émis le message considéré est la source SR1. Puis une opération 11 consiste à comparer la valeur algébrique de ce compteur par rapport à zéro :
      --- Si la valeur algébrique est négative ou nulle, l'opération suivante est l'opération 6 consistant à attendre un nouveau message, car cette valeur algébrique traduit le fait que la diffusion par le processus relais avait une certaine avance par rapport à la diffusion directe des message de la source SR1 vers le processus esclave SL1 considéré à titre d'exemple.
      --- Si la valeur algébrique du compteur est strictement positive, une opération 12 consiste alors à mémoriser le message dans un registre journal situé dans le processus esclave considéré et correspondant à la source ayant émise le message considéré. Par exemple, le registre journal L11 situé dans le processus esclave SL1 pour un message émis par la source SR1. Puis l'opération 6 consiste à attendre un nouveau message. Cette valeur algébrique strictement positive correspond à un retard de la rediffusion par le processus relais MR des messages émis par la source SR1 dans cet exemple. Ce retard pourrait être dû à une défaillance du processus relais MR. C'est pourquoi l'opération 12 consiste à mémoriser le message dans un registre journal L11 afin de le sauvegarder. Le processus esclave n'a pas le droit de traiter les données de ce message puisqu'il a été reçu directement en provenance de la source SR1.
- Si l'opération 3 conclut que le message reçu est un message rediffusé par le processus relais MR, une opération 15 consiste ensuite à déterminer si le processus ayant reçu ce message est le processus relais ou bien est un processus esclave :
   -- Si le processus considéré est le processus relais MR, une opération 23 consiste à traiter, dans la partie traitement T0 de ce processus, les données contenues dans le message. Puis l'opération 6 consiste à attendre un nouveau message.
   -- Si le processus considéré est un processus esclave, SL1 ou SL2, une opération 20 consiste à décrémenter un compteur situé dans le processus considéré et correspondant à la source ayant émis le message considéré : Par exemple, le compteur C11 dans le processus esclave SL1, si le message a été émis par la source SR1 par exemple. Puis une opération 21 consiste à comparer la valeur algébrique de ce compteur à la valeur zéro :
      --- Si la valeur algébrique est strictement négative, l'opération 23 consiste à traiter les données contenues dans le message reçu. Mais ce message n'est pas enregistré dans le registre journal correspondant à la source SR1, car la valeur négative du compteur indique que la diffusion par le relais a de l'avance par rapport à la diffusion directe des messages par la source SR1. Il n'y a donc pas de problème particulier.
      --- Si la valeur algébrique du compteur est positive ou nulle, une opération 22 consiste à effacer le message le plus ancien enregistré dans le registre journal correspondant à la source ayant émis le message reçu, parce que la réception de ce message via le processus relais rattrape en partie ou en totalité le retard de la diffusion par le relais vis-à-vis de la diffusion directe. Puis l'opération 23 consiste à traiter les données du message reçu, dans la partie traitement du processus ayant reçu le message. Enfin l'opération 6 consiste à attendre un nouveau message.

Dans le cas où l'un des processus esclaves SL1, SL2 détecte une défaillance du processus relais courant MR, le protocole de diffusion de manière fiable et ordonnée, qui lie tous les processus, diffuse un message "relais défaillant" vers tous les processus applicatifs. L'ensemble des processus esclaves met en oeuvre un protocole d'élection d'un nouveau processus relais, par exemple sur un critère de répartition optimale de la charge de travail des différents processus esclaves. Le processus esclave qui est élu comme nouveau processus relais active sa partie capable de rediffuser une suite de messages de manière fiable et ordonnée. Cette partie est référencée R1 et R2 dans les processus esclaves SL1 et SL2.

La figure 3 représente la seconde partie de l'organigramme des opérations du premier mode de mise en oeuvre du procédé selon l'invention, cette partie concernant plus particulièrement les opérations réalisées par un processus applicatif lorsqu'il reçoit un message "relais défaillant".

Une première opération 30 consiste à recevoir ce message "relais défaillant". Puis une opération 31 consiste à participer à l'élection du nouveau processus relais. Un test 32 détermine si le processus considéré est le nouveau processus relais, commun à toutes les sources :
- Si le processus considéré n'est pas le nouveau processus relais, une opération 33 consiste simplement à attendre un nouveau message.
- S'il est le nouveau processus relais, une opération 34 consiste à lire dans chaque registre journal de ce processus, et à diffuser tous les messages contenus dans ce registre journal. Puis une opération 35 consiste à effacer les messages que contient chaque journal de ce processus. Puis l'opération 33 consiste simplement à attendre un nouveau message.

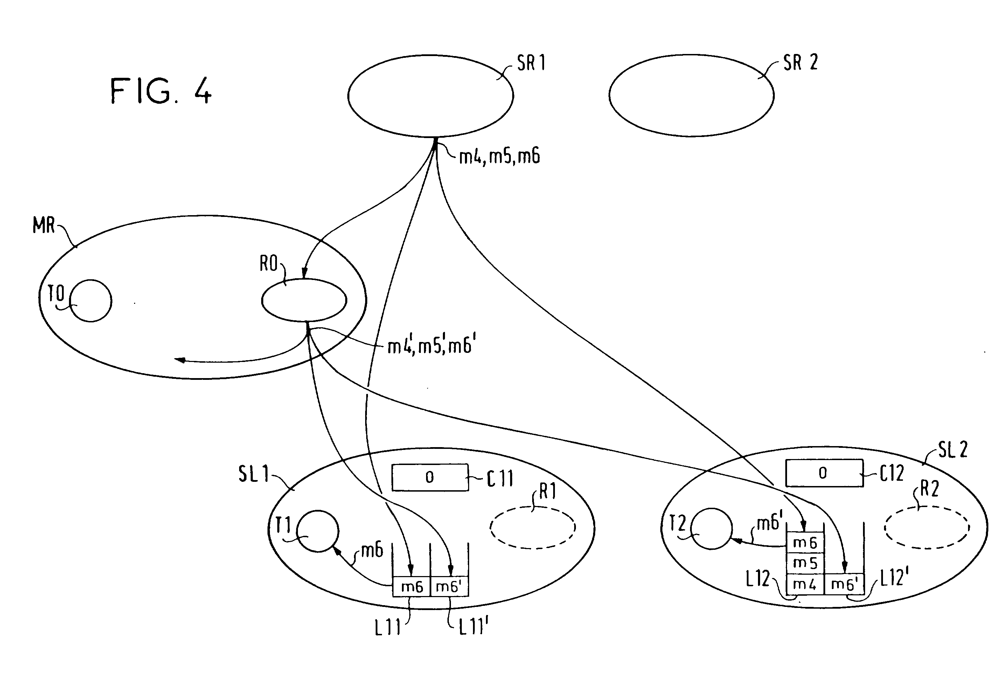

La figure 4 représente le même système que la figure 1 et illustre une étape d'initialisation de ce premier mode de mise en oeuvre du procédé selon l'invention. A titre d'exemple, la figure 4 représente :
- un premier registre journal L11 et un second registre journal L11', situés dans le processus esclave SL1 et correspondant à la source SR1;
- un premier registre journal L12 et un second registre L12', situés dans le processus esclave SL2 et correspondant à la source SR1. Une paire de registres journaux analogues, L21 et L22, et correspondant à la source SR2, est située dans le processus esclave SL1 mais n'est pas représentée sur la figure 4 pour plus de clarté. De même une autre paire de registres journaux, L22 et L22', correspondant à la source SR2 est située dans le processus esclave SL2 mais n'est pas représentée sur la figure 4.

Lorsqu'un processus esclave SLj (où j=1,2,...) reçoit un message en provenance de la source SRi (où i=1,2,...) via le processus relais MR, il compare les contenus des deux registres journaux Lij et Lij' correspondant à la source SRi. S'il détecte qu'il a reçu un même message directement (Le message est dans Lij) et via le processus relais MR (Le même message est dans Lij'), la phase d'initialisation se termine. Il charge le compteur Cij avec une valeur correspondant au retard ou à l'avance qu'il constate :
- Il charge une valeur zéro dans le compteur, s'il constate qu'il n'y a aucun retard de la diffusion par le processus relais MR vis-à-vis de la diffusion directe par la source SR1 (Le message qu'il vient de recevoir via le processus relais correspond au dernier message reçu directement de la source). Puis il traite le dernier message reçu et efface le contenu éventuel des registres journaux Lij et Lij'.
- Il charge une valeur +n dans le compteur, s'il constate qu'il y a un retard de n messages, de la diffusion par le processus relais MR vis-à-vis de la diffusion directe par la source SR1 (Le message qu'il vient de recevoir via le processus relais est suivi de n messages dans le registre journal mémorisant les messages reçus directement de la source). Puis il traite le dernier message reçu et efface le contenu éventuel des registres journaux Lij et Lij', à l'exception des messages qui sont mémorisés dans Lij et qui n'ont pas encore été reçus via le processus relais MR .

La figure 4 illustre la phase d'initialisation par un exemple où la source SR1 émet une suite de messages m4, m5, m6 à destination de tous les processus applicatifs MR, SL1, SL2. Ces messages sont reçus par le processus relais MR dans l'ordre m4-m5-m6 et sont rediffusés par la partie R0, de manière fiable et ordonnée, sous la forme d'une suite de messages m4'-m5'-m6' qui sont donc reçus dans cet ordre par le traitement T0 du processus relais MR et par les processus esclaves SL1, SL2.

Le processus esclave SL1 démarre dans des conditions telles qu'il reçoit seulement les messages m6 et m6'. Il enregistre m6 dans le premier registre journal L11, et m6' dans le second registre journal L11'. Il compare les contenus des deux registres journaux L11 et L11' correspondant à la source SR1, et détecte qu'il a reçu un même message directement et via le processus relais MR. Comme m6' correspond au dernier message de Lij, il charge le compteur C11 avec la valeur zéro. Il transmet le message m6' à la partie traitement T1. Puis il efface le contenu des registres journaux L11 et L11'.

Le processus esclave SL2 démarre dans des conditions telles qu'il reçoit directement de la source SR1 les messages m5 et m6. Il les enregistre dans le premier registre journal L12. Il reçoit en outre le message m5' diffusé par le processus relais MR. Par contre, il ne recevra jamais le message m4' qui précédait le message m5'. Il enregistre m5' dans le second registre journal L12'. Il compare le contenu des deux registres journaux L12 et L12', et conclut que la diffusion via le processus relais MR a pris un retard correspondant à un message, c'est-à-dire le message m6. Il charge donc le compteur C12, correspondant à la source SR1, avec une valeur +1. Il transmet le message m5 à la partie traitement T2. Puis il efface tous les messages du registre journal L12 à l'exception du message m6, et efface le contenu du registre journal L12'.

Quand la phase d'initialisation est terminée, il est possible de détecter et de remédier à tout retard de diffusion dû à une défaillance du processus relais. Par conséquent, l'ordre et la cohérence des messages sont protégés contre une défaillance du processus relais.

La figure 5 illustre le fonctionnement du même système, immédiatement après la phase d'initialisation. Dans le cas représenté, un message m10 parvient au processus esclave SL2 plus rapidement par le processus relais MR que par la diffusion directe. Par contre, la réplique m10' diffusée par la partie R0 du processus relais MR arrive plus vite au processus esclave SL1, que le message original m10.

Lorsque le message m10' est reçu par le processus esclave SL1, ce dernier décrémente d'une unité le compteur C11. Il contenait, à l'instant considéré, une valeur 0. Le compteur C11 contient désormais une valeur -1 qui est strictement négative, ce qui signifie que la diffusion par le processus relais a une avance correspondant à un message, du point de vue du processus SL1. Le message m10' ayant transité par le processus relais, il est transmis à la partie traitement T1 pour traiter les données que contient ce message. Le premier registre journal L11 reste vide.

La réception du message m10 par le processus esclave SL2 provoque l'incrémentation d'une unité du compteur C12 qui contenait une valeur zéro . Le compteur C12 contient désormais une valeur +1 qui est strictement positive, ce qui signifie que la diffusion par le processus relais MR a un certain retard par rapport à la diffusion directe depuis la source SR1, du point de vue du processus SL2. Le message m10 est alors inscrit dans le registre journal L12 qui était vide.

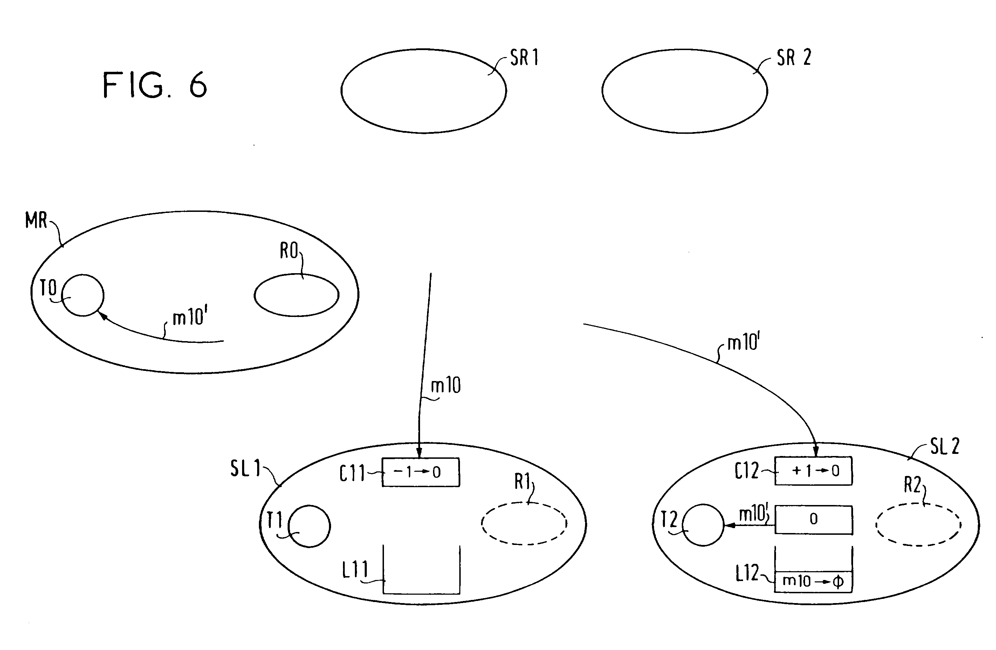

La figure 6 illustre ce qui passe ensuite lorsque le message m10', réplique du message m10, est reçu par le processus esclave SL2 , et lorsque le message m10 est reçu par le processus SL1 . Dans le processus esclave SL1, la réception du message m10 provoque l'incrémentation d'une unité du compteur C11. Son contenu passe à la valeur nulle, ce qui enregistre le fait que la diffusion par le processus relais MR a un retard nul par rapport à la diffusion directe depuis la source SR1, du point de vue du processus SL1. Le registre journal L11 reste vide .

Lorsque le processus esclave SL2 reçoit le message m10', il décrémente la valeur du compteur C12. Cette valeur passe de +1 à 0. Le fait que cette valeur soit nulle signifie que la rediffusion par le processus relais MR n'a plus de retard vis-à-vis de la diffusion directe. Le message m10' est transmis à la partie traitement T2 pour traiter les données de ce message, alors que le message m10 est effacé du registre journal L12.

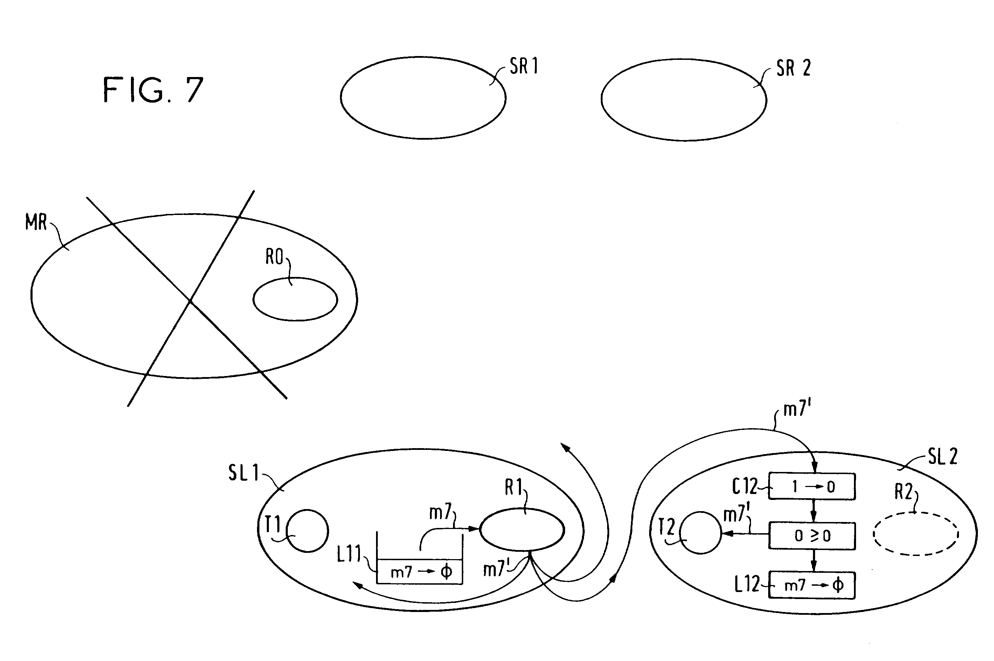

La figure 7 illustre le cas de la défaillance du processus relais MR. Un message "relais défaillant" a été émis par le protocole de diffusion fiable et ordonnée qui lie tous les processus applicatifs. Les processus esclaves SL1 et SL2 ont élu un nouveau processus relais. A l'instant considéré, l'élection est achevée et l'ensemble des processus applicatifs a été informé du fait que le nouveau processus relais est SL1. Le processus applicatif SL2 reste un processus esclave. Dans le nouveau processus relais SL1, la partie R1 capable de rediffuser une suite de messages de manière fiable et ordonnée est activée pour permettre la fonction de relais. Ses compteurs, notamment C11, sont désactivés.

Dans l'exemple illustré par la figure 7, le registre journal L11 situé dans le processus esclave SL1 et correspondant à la source SR1, contient un seul message m7 qui est arrivé directement en provenance de la source SR2 et qui n'a jamais été rediffusé via le processus relais MR, à cause de sa défaillance. Lorsqu'il est informé qu'il a été élu processus relais , le processus SL1 lit le contenu de tous ses registres journaux . Il trouve le message m7 dans le registre L11 . La partie R1 du nouveau processus relais SL1 rediffuse le message m7 sous la forme d'un message m7' à destination de tous les processus applicatifs. Le nouveau processus relais SL1 achève ainsi la diffusion du message m7 qui n'avait pu être réalisée par le processus relais défaillant MR.

Le processus esclave SL2 a mémorisé, lui aussi, le message m7 dans son registre journal L12, et le compteur correspondant, C12, contient une valeur +1. Lorsqu'il reçoit le message m7', le processus SL2 décrémente le compteur 12 d'une unité. La valeur du compteur C12 devient nulle, ce qui signifie que la rediffusion par le processus relais n'a plus de retard vis à vis de la diffusion directe. Le message m7' est transmis à la partie traitement T2, alors que le message homologue m7 est effacé du registre journal L12.

Dans le premier mode de mise en oeuvre du procédé selon l'invention, décrit précédemment, il n'y a qu'un seul processus relais MR, commun pour toutes les sources de données SR1, SR2. L'unicité du processus relais garantit alors que les suites de messages reçus par les différents processus esclaves SL1, SL2, sont identiques parce qu'elles sont diffusées par la partie R0 du seul processus qui est utilisé comme relais. Selon le second mode de mise en oeuvre du procédé selon l'invention, il y a plusieurs processus applicatifs utilisés comme relais. En particulier il peut y avoir un processus relais distinct pour chacune des sources respectivement. Par contre, plusieurs processus ne peuvent pas être simultanément relais pour une même source. Il est envisageable aussi qu'un processus relais soit commun à une partie des sources, mais pas à toutes les sources.

Il est alors indispensable que les processus utilisés comme relais appliquent un même protocole de diffusion de messages de manière fiable et ordonnée, de telle sorte que la rediffusion des messages par l'ensemble de ces processus relais soit coordonnée afin que la suite de messages rediffusés ait un ordre bien déterminé. La demande de brevet européen n° 0 650 280 décrit un tel protocole de diffusion fiable et ordonné applicable simultanément par une pluralité de processus applicatifs.

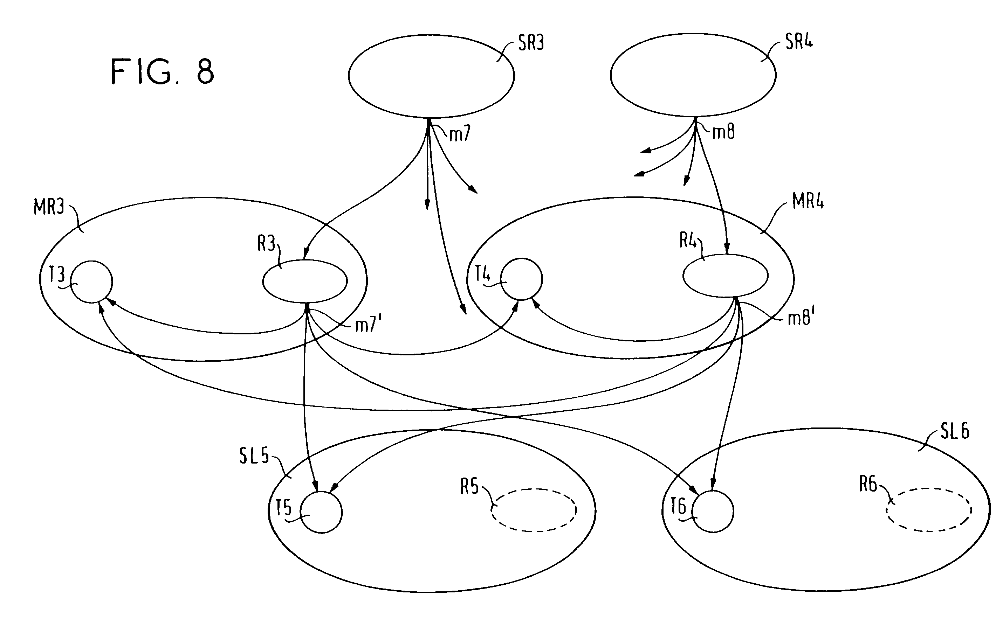

La figure 8 illustre ce second mode de mise en oeuvre du processus selon l'invention, dans un exemple de système comportant deux processus relais MR3 et MR4 rediffusant respectivement les messages émis par deux sources SR3, SR4. Il est à noter qu'ils sont aussi processus esclaves respectivement pour les sources SR4 et SR3. Les processus relais MR3 et MR4 comportent respectivement des traitements T3 et T4, et deux parties R3 et R4 capables de rediffuser une suite de messages de manière fiable et ordonnée selon un même protocole. Cet exemple comporte en outre deux processus SL5 et SL6 qui sont esclaves pour les deux sources SR3, SR4. Ces derniers comportent respectivement des traitements T5 et T6 pour traiter les données de messages reçus, et des parties R5 et R6 capables de rediffuser une suite de messages de manière fiable et ordonnée selon le même protocole que les parties R3 et R4, pour le cas où l'un de ces processus esclaves deviendrait un processus relais en remplacement d'un processus relais défaillant. Le protocole utilisé est par exemple celui décrit dans la demande de brevet européen 0 650 280.

A titre d'exemple, la figure 8 représente la rediffusion d'un message m7 émis par la source SR3 et la rediffusion d'un message m8 émis par la source SR4. Lorsque la partie R3 du processus relais MR3 correspondant à la source SR3 reçoit le message m7, elle reconnaît que ce message est issu de la source SR3. Cette partie R3 le rediffuse sous la forme d'un message m7', vers tous les autres processus applicatifs SL5, SL6, MR4, et vers le traitement T3 qui fait partie du processus relais MR3. Les données du message m7' sont alors traitées par les traitements T3, T4, T5, T6. Parallèlement, le message m8 est diffusé par la source SR4. Lorsque la partie R4 du processus relais R4 correspondant à la source SR4 reçoit le message m8, elle reconnaît qu'il est émis par la source SR4. Cette partie R4 le rediffuse sous la forme d'un message m8' à destination de tous les processus applicatifs MR3, SL5, SL6, et à destination du traitement T4 qui fait partie du processus relais MR4. Les données du message m8' sont alors traitées par les traitements T3, T4, T5, T6. L'émission de m7' et l'émission de m8' sont coordonnées , par le protocole de diffusion fiable et ordonnée , de telle sorte que tous les processus reçoivent ces messages dans un même ordre, m7'-m8' par exemple.

Les opérations réalisées dans les processus esclaves SL5, SL6 et dans les processus relais MR3, MR4 sont les mêmes que celles décrites pour le premier mode de mise en oeuvre, en se référant aux figures 2 et 3. Il n'y a qu'une seule différence : Les opérations 4 et 15 qui consistent à déterminer si le processus considéré est le processus relais commun, déterminent dans ce second mode si le processus considéré est le processus relais correspondant à la source ayant émis le message considéré. De manière analogue à ce qui a été décrit pour le premier exemple, les processus esclaves comportent chacun un compteur, un premier registre journal, et un second registre journal pour chaque source, le second étant utilisé uniquement pendant une phase d'initialisation au moment du démarrage du processus esclave considéré.

Dans d'autres exemples de mise en oeuvre du procédé selon l'invention, le nombre de processus relais peut être supérieur à un sans être égal au nombre de sources, car un même processus relais peut être utilisé pour plusieurs sources. La seule condition est que tous les processus utilisés comme relais comportent une partie capable de rediffuser une suite de messages de manière fiable et ordonnée, selon un même protocole.

## Revendications

1. Procédé pour ordonnancer une pluralité de messages provenant respectivement d'une pluralité de sources (SR1, SR2) et à destination d'une pluralité de processus applicatifs destinataires (MR, SL1, SL2) susceptibles de traiter les données de ces messages; chaque source diffusant une suite de messages de manière fiable et ordonnée; et chaque processus applicatif destinataire étant capable de rediffuser une suite de messages de manière fiable et ordonnée vers tous les processus applicatifs;
caractérisé en ce que, pour que tous les processus applicatifs destinataires reçoivent ces messages dans un même ordre, il consiste à :
- choisir parmi les processus applicatifs un processus (MR), appelé processus relais, unique et commun pour toutes les sources, les autres processus applicatifs (SL1, SL2) étant appelés processus esclaves;
- rediffuser de ce processus relais vers tous les processus applicatifs y compris le processus relais, tous les messages diffusés par les sources;
- traiter dans le processus relais (MR) les données de tous les messages (m1'-m2') qu'il rediffuse;
- traiter dans les processus esclaves (SL1, SL2) seulement les données des messages (m1'-m2') reçus via le processus relais (MR), les données des messages (m1, m2) reçus directement en provenance des sources n'étant pas traitées.

2. Procédé selon la revendication 1, caractérisé en ce que, pour remédier à une défaillance du processus relais courant (MR), il consiste, dans chaque processus esclave (SL1, SL2), recevant un message, à :
- le mémoriser (12) s'il n'a pas été déjà reçu par ce processus esclave via le processus relais;
- puis l'effacer (22) s'il est reçu ensuite par ce processus esclave via le processus relais (MR) ;
et consiste à rediffuser puis effacer tous les messages mémorisés et non encore effacés, si le processus relais courant (MR) a eu une défaillance et si le processus esclave considéré devient le nouveau processus relais commun pour toutes les sources.

3. Procédé selon la revendication 1, caractérisé en ce que pour déterminer, dans chaque processus esclave (SL1), si un message (m3) diffusé par une source a déjà été reçu par ce processus esclave via le processus relais (MR) avant être reçu directement en provenance de cette source, il consiste à :
- décrémenter (20) un compteur (C11), propre à ce processus esclave (SL1) et à cette source (SR1), chaque fois que le processus esclave (SL1) reçoit un message provenant de cette source via le processus relais;
- incrémenter (10) ce compteur (C11) chaque fois que le processus esclave (SL1) reçoit un message provenant de cette source directement;
- et conclure qu'un message (m3) diffusé par une source n'a pas déjà été reçu par ce processus esclave via le processus relais, si et seulement si la valeur algébrique du compteur est strictement positive.

4. Procédé pour ordonnancer une pluralité de messages provenant respectivement d'une pluralité de sources (SR1, SR2) et à destination d'une pluralité de processus applicatifs destinataires (MR, SL1, SL2); chaque source diffusant une suite de messages de manière fiable et ordonnée; et chaque processus applicatif destinataire étant capable d'appliquer un même protocole pour diffuser une suite de messages de manière fiable et ordonnée vers tous les processus applicatifs;
caractérisé en ce, pour que tous les processus applicatifs destinataires reçoivent ces messages dans un même ordre, il consiste à :
- choisir parmi les processus applicatifs une pluralité de processus appelés relais, en choisissant pour chacune des sources (SR1, SR2) un processus applicatif (MR1, MR2), appelé processus relais pour cette source, les autres processus applicatifs (SL1, SL2) étant appelés processus esclave pour cette source; un même processus applicatif pouvant être choisi comme processus relais pour plusieurs sources, mais chaque source n'ayant qu'un seul processus relais;
- rediffuser de manière fiable et ordonnée, au moyen du processus applicatif (MR1 respectivement MR2) choisi comme relais pour une source, (SR1 respectivement SR2) les messages diffusés par cette source et à destination de tous les processus applicatifs; tous les processus relais (MR1, MR2) appliquant un même protocole de diffusion fiable et ordonnée;
- traiter dans le processus relais (MR1 respectivement MR2), pour une source, les données de tous les messages qu'il reçoit directement de cette source (SR1 respectivement SR2);
- traiter dans les processus esclaves (SL5, SL6) seulement les données des messages (m7'-m8') reçus via les processus relais (MR3-MR4), les données des messages (m7, m8) reçus directement en provenance des sources n'étant pas traitées.

5. Procédé selon la revendication 4, caractérisé en ce que, pour remédier à une défaillance du processus relais courant (MR1 respectivement MR2) pour une source (SR1 respectivement SR2), il consiste dans chaque processus esclave (SL5, SL6) recevant un message provenant d'une source pour laquelle il est processus esclave, à :
- le mémoriser (12) si le même message n'a pas été déjà reçu par ce processus esclave via le processus (MR3) relais pour cette source;
- puis l'effacer (22) s'il est reçu ensuite par ce processus esclave via le processus relais (MR3) pour cette source ;
et consiste à rediffuser puis effacer tous les messages mémorisés et non encore effacés, si le processus relais courant a eu une défaillance et si le processus esclave considéré devient le nouveau processus relais commun pour toutes les sources.

6. Procédé selon la revendication 4, caractérisé en ce que pour déterminer, dans chaque processus esclave pour une source, si un message diffusé par cette source a déjà été reçu par ce processus esclave via le processus relais avant d'être reçu directement en provenance de cette source, il consiste à :
- décrémenter (20) un compteur, propre à ce processus esclave et à cette source, chaque fois que le processus esclave reçoit un message provenant de cette source via le processus relais pour cette source;
- incrémenter (10) ce compteur chaque fois que le processus esclave reçoit un message provenant de cette source directement;
- et conclure qu'un message diffusé par une source n'a pas déjà été reçu par ce processus esclave via le processus relais, si et seulement si la valeur algébrique du compteur est strictement positive.

7. Système pour ordonnancer une pluralité de messages provenant respectivement d'une pluralité de sources (SR1, SR2) et à destination d'une pluralité de processus applicatifs destinataires (MR, SL1, SL2) susceptibles de traiter les données de ces messages; chaque source diffusant une suite de messages de manière fiable et ordonnée; et chaque processus applicatif destinataire étant capable de rediffuser une suite de messages de manière fiable et ordonnée vers tous les processus applicatifs;
caractérisé en ce que, pour que tous les processus applicatifs destinataires reçoivent ces messages dans un même ordre, caractérisé en ce qu'il comporte :
- des moyens pour choisir parmi les processus applicatifs un processus (MR), appelé processus relais, unique et commun pour toutes les sources, les autres processus applicatifs (SL1, SL2) étant appelés processus esclaves;
- des moyens pour rediffuser de ce processus relais vers tous les processus applicatifs y compris le processus relais, tous les messages diffusés par les sources;
- des moyens pour traiter dans le processus relais (MR) les données de tous les messages (m1'-m2') qu'il rediffuse;
- des moyens pour traiter dans les processus esclaves (SL1, SL2) seulement les données des messages (m1'-m2') reçus via le processus relais (MR), les données des messages (m1, m2) reçus directement en provenance des sources n'étant pas traitées.

8. Système selon la revendication 7, caractérisé en ce que, pour remédier à une défaillance du processus relais courant (MR), il comporte, dans chaque processus esclave (SL1, SL2), recevant un message :
- des moyens pour mémoriser (12) ce message s'il n'a pas été déjà reçu par ce processus esclave via le processus relais;
- des moyens pour l'effacer ensuite (22) s'il est reçu ensuite par ce processus esclave via le processus relais (MR);
et des moyens (34, 35)pour rediffuser puis effacer tous les messages mémorisés et non encore effacés, si le processus relais courant (MR) a eu une défaillance et si le processus esclave considéré devient le nouveau processus relais commun pour toutes les sources.

9. Système selon la revendication 7, caractérisé en ce que pour déterminer, dans chaque processus esclave (SL1), si un message (m3) diffusé par une source a déjà été reçu par ce processus esclave via le processus relais (MR) avant être reçu directement en provenance de cette source, il comporte :
- des moyens pour décrémenter (20) un compteur (C11), propre à ce processus esclave (SL1) et à cette source (SR1), chaque fois que le processus esclave (SL1) reçoit un message provenant de cette source via le processus relais;
- des moyens pour incrémenter (10) ce compteur (C11) chaque fois que le processus esclave (SL1) reçoit un message provenant de cette source directement;
- et des moyens pour conclure qu'un message (m3) diffusé par une source n'a pas déjà été reçu par ce processus esclave via le processus relais, si et seulement si la valeur algébrique du compteur est strictement positive.

10. Système pour ordonnancer une pluralité de messages provenant respectivement d'une pluralité de sources (SR1, SR2) et à destination d'une pluralité de processus applicatifs destinataires (MR, SL1, SL2); chaque source diffusant une suite de messages de manière fiable et ordonnée; et chaque processus applicatif destinataire étant capable d'appliquer un même protocole pour diffuser une suite de messages de manière fiable et ordonnée vers tous les processus applicatifs;
caractérisé en ce, pour que tous les processus applicatifs destinataires reçoivent ces messages dans un même ordre, il comporte :
- des moyens pour choisir parmi les processus applicatifs une pluralité de processus appelés relais, en choisissant pour chacune des sources (SR1, SR2) un processus applicatif (MR1, MR2), appelé processus relais pour cette source, les autres processus applicatifs (SL1, SL2) étant appelés processus esclave pour cette source; un même processus applicatif pouvant être choisi comme processus relais pour plusieurs sources, mais chaque source n'ayant qu'un seul processus relais;
- des moyens pour rediffuser de manière fiable et ordonnée, au moyen du processus applicatif (MR1 respectivement MR2) choisi comme relais pour une source, (SR1 respectivement SR2) les messages diffusés par cette source et à destination de tous les processus applicatifs; tous les processus relais (MR1, MR2) appliquant un même protocole de diffusion fiable et ordonnée;
- des moyens pour traiter dans le processus relais (MR1 respectivement MR2), pour une source, les données de tous les messages qu'il reçoit directement de cette source (SR1 respectivement SR2);
- et des moyens pour traiter dans les processus esclaves (SL5, SL6) seulement les données des messages (m7'-m8') reçus via les processus relais (MR3-MR4), les données des messages (m7, m8) reçus directement en provenance des sources n'étant pas traitées.

11. Système selon la revendication 10, caractérisé en ce que, pour remédier à une défaillance du processus relais courant (MR1 respectivement MR2) pour une source (SR1 respectivement SR2), il comporte dans chaque processus esclave (SL5, SL6) recevant un message provenant d'une source pour laquelle il est processus esclave :
- des moyens pour mémoriser (12) un message si le même message n'a pas été déjà reçu par ce processus esclave via le processus (MR3) relais pour cette source;
- des moyens pour l'effacer ensuite (22) s'il est reçu ensuite par ce processus esclave via le processus relais (MR3) pour cette source,
et des moyens (34, 35)pour rediffuser puis effacer tous les messages mémorisés et non encore effacés, si le processus relais courant (MR1) a eu une défaillance et si le processus esclave considéré devient le nouveau processus relais pour cette source.

12. Système selon la revendication 10, caractérisé en ce que pour déterminer, dans chaque processus esclave pour une source, si un message diffusé par cette source a déjà été reçu par ce processus esclave via le processus relais avant d'être reçu directement en provenance de cette source, il comporte :
- des moyens pour décrémenter (20) un compteur, propre à ce processus esclave et à cette source, chaque fois que le processus esclave reçoit un message provenant de cette source via le processus relais pour cette source;
- des moyens pour incrémenter (10) ce compteur chaque fois que le processus esclave reçoit un message provenant de cette source directement;
- et des moyens pour conclure qu'un message diffusé par une source n'a pas déjà été reçu par ce processus esclave via le processus relais, si et seulement si la valeur algébrique du compteur est strictement positive.

## Patentansprüche

1. Verfahren zum zeitlichen Ordnen einer Mehrzahl von Meldungen, die jeweils von einer Mehrzahl von Quellen (SR1, SR2) kommen und für eine Zahl von Adressaten-Anwendungsprozessen (MR, SL1, SL2) bestimmt sind, die in der Lage sind, die Daten dieser Meldungen zu verarbeiten, wobei jede Quelle eine Folge von Meldungen in zuverlässiger und geordneter Form verbreitet und jeder Adressaten-Anwendungsprozess in der Lage ist, eine Folge von Meldungen in zuverlässiger und geordneter Form an alle Anwendungsprozesse weiterzuverbreiten;
dadurch gekennzeichnet, dass es, damit alle Adressaten-Anwendungsprozesse diese Meldungen in einer gleichen Reihenfolge empfangen, darin beruht,
- unter den Anwendungsprozessen einen einzigen und allen Quellen gemeinsamen Prozess (MR), als Relais-Prozess bezeichnet, zu wählen, wobei die anderen Anwendungsprozesse (SL1, SL2) als Slave-Prozesse bezeichnet werden;
- alle von den Quellen verbreiteten Meldungen durch den Relais-Prozess an alle Anwendungsprozesse einschließlich des Relais-Prozesses weiterzuverbreiten;
- in dem Relais-Prozess (MR) die Daten aller Meldungen (m1'-m2') zu verarbeiten, die er weiterverbreitet;
- in den Slave-Prozessen (SL1, SL2) nur die Daten der Meldungen (m1'-m2') zu verarbeiten, die über den Relais-Prozess (MR) empfangen worden sind, wobei die Daten der direkt von den Quellen kommend empfangenen Meldungen (m1, m2) nicht verarbeitet werden.

2. Verfahren nach Anspruch 1, dadurch gekennzeichnet, dass zum Beheben einer Störung des aktuellen Relais-Prozesses (MR) es darin beruht, in jedem Slave-Prozess (SL1, SL2), der eine Meldung empfängt,
- diese zu speichern (12), wenn sie nicht bereits von dem Slave-Prozess über den Relais-Prozess empfangen worden ist;
- sie zu löschen (22), wenn sie anschließend von dem Slave-Prozess über den Relais-Prozess (MR) empfangen wird;
und darin beruht, alle gespeicherten und noch nicht gelöschten Meldungen weiterzuverbreiten und dann zu löschen, wenn der aktuelle Relais-Prozess (MR) eine Störung gehabt hat, und der betreffende Slave-Prozess zu dem neuen, allen Quellen gemeinsamen Relais-Prozess wird.

3. Verfahren nach Anspruch 1, dadurch gekennzeichnet, dass es, um in jedem Slave-Prozess (SL1) zu bestimmen, ob einen von einer Quelle verbreitete Meldung (m3) bereits von dem Slave-Prozess über den Relais-Prozess (MR) empfangen worden ist, bevor sie direkt von dieser Quelle kommend empfangen wird, darin beruht,
- einen Zähler (C11), der zu dem Slave-Prozess (SL1) und der Quelle (SR1) gehört, jedesmal zu dekrementieren, wenn der Slave-Prozess (SL1) eine Meldung empfängt, die über den Relais-Prozess von dieser Quelle kommmt;
- den Zähler (C11) jedesmal zu inkrementieren (10), wenn der Slave-Prozess (SL1) eine direkt von dieser Quelle kommende Meldung empfängt;
- und festzustellen, dass eine von einer Quelle verbreitete Meldung (m3) nicht bereits von dem Slave-Prozess über den Relais-Prozess empfangen worden ist, wenn und nur wenn der algebraische Wert des Zählers strikt positiv ist.

4. Verfahren zum zeitlichen Ordnen einer Mehrzahl von Meldungen, die jeweils von einer Mehrzahl von Quellen (SR1, SR2) kommen und für eine Mehrzahl von Adressaten-Anwendungsprozessen (MR, SL1, SL2) bestimmt sind, wobei jede Quelle eine Folge von Meldungen in zuverlässiger und geordneter Form verbreitet und jeder Anwendungsprozess in der Lage ist, ein gleiches Protokoll anzuwenden, um eine Folge von Meldungen in zuverlässiger und geordneter Form an die Anwendungsprozesse zuverbreiten;
dadurch gekennzeichnet, dass, damit alle Adressaten-Anwendungsprozesse diese Meldungen in einer gleichen Reihenfolge empfangen, es darin beruht,
- unter den Anwendungsprozessen eine Mehrzahl von als Relais-Prozesse bezeichneten Prozessen auszuwählen, indem für jede der Quellen (SR1, SR2) ein Anwendungsprozess (MR1, MR2), der als Relais-Prozess für diese Quelle bezeichnet wird, gewählt wird, wobei die anderen Anwendungsprozesse (SL1, SL2) als Slave-Prozesse für diese Quelle bezeichnet werden, wobei ein gleicher Anwendungsprozess als Relais-Prozess für mehrere Quellen gewählt werden kann, jede Quelle aber nur einen einzigen Relais-Prozess hat,
- mit Hilfe des als Relais für eine Quelle ausgewählten Relais-Prozesses (MR1 bzw. MR2) in zuverlässiger und geordneter Form die von dieser Quelle verbreiteten Meldungen an alle Anwendungsprozesse weiterzuverbreiten, wobei alle Relais-Prozesse (MR1, MR2) ein gleiches Protokoll zur zuverlässigen und geordneten Verbreitung anwenden;
- in dem Relais-Prozess (MR1 bzw. MR2) für eine Quelle die Daten aller Meldungen zu verarbeiten, die er direkt von dieser Quelle (SR1 bzw. SR2) empfängt;
- in den Slave-Prozessen (SL5, SL6) nur die Daten von über die Relais-Prozesse (MR3-MR4) empfangenen Meldungen (m7'-m8') zu verarbeiten, wobei die Daten der direkt von den Quellen kommend empfangenen Meldungen (m7, m8) nicht verarbeitet werden.

5. Verfahren nach Anspruch 4, dadurch gekennzeichnet, dass zum Beheben einer Störung des aktuellen Relais-Prozesses (MR1 bzw. MR2) für eine Quelle (SR1 bzw. SR2) es darin beruht, in jedem Slave-Prozess (SL5, SL6), der eine von einer Quelle, für die er Slave-Prozess ist, kommende Meldung empfängt,
- sie zu speichern (12), wenn die gleiche Meldung nicht bereits von dem Slave-Prozess über den Relais-Prozess (MR3) für diese Quelle empfangen worden ist;
- sie dann zu löschen (22), wenn sie anschließend von dem Slave-Prozess über den Relais-Prozess (MR3) für diese Quelle empfangen wird;
und darin beruht, alle gespeicherten und noch nicht gelöschten Meldungen weiterzuverbreiten und dann zu löschen, wenn der aktuelle Relais-Prozess eine Störung gehabt hat und der betreffende Slave-Prozess zum neuen gemeinsamen Relais-Prozess für alle Quellen wird.

6. Verfahren nach Anspruch 4, dadurch gekennzeichnet, dass es, um in jedem Slave-Prozess für eine Quelle zu bestimmen, ob eine von dieser Quelle verbreitete Meldung bereits von dem Slave-Prozess über den Relais-Prozess empfangen worden ist, bevor sie direkt von dieser Quelle kommend empfangen worden ist, darin beruht,
- einen Zähler (20), der zu diesem Slave-Prozess und dieser Quelle gehört, jedesmal zu dekrementieren, wenn der Slave-Prozess eine von der Quelle kommenden Nachricht über den Relais-Prozess für diese Quelle empfängt;
- den Zähler jedesmal zu inkrementieren (10), wenn der Slave-Prozess eine direkt von dieser Quelle kommende Meldung empfängt;
- und festzustellen, dass eine von einer Quelle verbreitete Meldung noch nicht bereits von dem Slave-Prozess über den Relais-Prozess empfangen worden ist, wenn und nur wenn der algebraische Wert des Zählers strikt positiv ist.

7. System zum zeitlichen Ordnen einer Mehrzahl von Meldungen, die jeweils von einer Mehrzahl von Quellen (SR1, SR2) stammen und für eine Mehrzahl von Adressaten-Anwendungsprozessen (MR, SL1, SL2) bestimmt sind, die in der Lage sind, die Daten dieser Meldungen zu verarbeiten, wobei jede Quelle eine Folge von Meldungen in zuverlässiger und geordneter Form verbreitet und jeder Adressaten-Anwendungsprozess in der Lage ist, eine Folge von Meldungen in zuverlässiger und geordneter Form an alle Anwendungsprozesse weiterzuverbreiten,
dadurch gekennzeichnet, dass, damit diese Adressaten-Anwendungsprozesse diese Meldungen in einer gleichen Reihenfolge empfangen, es umfasst:
- Mittel zum Wählen eines als Relais-Prozess bezeichneten, einzigen und allen Quellen gemeinsamen Prozesses (MR) unter den Anwendungsprozessen, wobei die anderen Anwendungsprozesse (SL1, SL2) als Slave-Prozesse bezeichnet werden;
- Mittel zum Weiterverbreiten aller von den Quellen verbreiteten Meldungen von diesem Relais-Prozess an alle Anwendungsprozesse einschließlich des Relais-Prozesses;
- Mittel zum Verarbeiten, in den Relais-Prozess (MR), der Daten aller Meldungen (m1'-m2'), die er weiterverbreitet;
- Mittel zum Verarbeiten, in den Slave-Prozessen (SL1, SL2), nur der über den Relais-Prozess (MR) empfangenen Meldungen (m1'-m2'), wobei die Daten der direkt von den Quellen kommend empfangenen Meldungen (ml, m2) nicht verarbeitet werden.

8. System nach Anspruch 7, dadurch gekennzeichnet, dass es zum Beheben einer Störung des aktuellen Relais-Prozesses (MR1) in jedem Slave-Prozess (SL1, SL2), der eine Meldung empfängt, umfasst:
- Mittel zum Speichern (12) dieser Meldung, wenn sie nicht bereits von diesem Slave-Prozess über den Relais-Prozess empfangen worden ist;
- Mittel zum anschließenden Löschen (22), wenn sie anschließend von dem Slave-Prozess über den Relais-Prozess (MR) empfangen wird;
- und Mittel (34, 35) zum Weiterverbreiten und dann Löschen aller gespeicherten und noch nicht gelöschten Meldungen, wenn der aktuelle Relais-Prozess (MR) eine Störung gehabt hat und der betreffende Slave-Prozess zum neuen, allen Quellen gemeinsamen Relais-Prozess wird.

9. System nach Anspruch 7, dadurch gekennzeichnet, dass es in jedem Slave-Prozess (SL1), um zu bestimmen, ob eine von einer Quelle verbreitete Meldung (m3) bereits von diesem Slave-Prozess über den Relais-Prozess (MR) empfangen worden ist, bevor sie direkt von der Quelle kommend empfangen worden ist, umfasst:
- Mittel zum Dekrementieren (20) eines Zähler (C11), der zu diesem Slave-Prozess (SL1) und dieser Quelle (SR1) gehört, jedesmal, wenn der Slave-Prozess (SL1) eine von der Quelle kommende Meldung über den Relais-Prozess empfängt;
- Mittel zum Inkrementieren (10) des Zählers (C11) jedesmal, wenn der Slave-Prozess (SL1) eine direkt von dieser Quelle kommende Meldung empfängt;
- und Mittel zum Feststellen, dass eine von einer Quelle verbreitete Meldung (m3) noch nicht bereits von dem Slave-Prozess über den Relais-Prozess empfangen worden ist, wenn und nur wenn der algebraische Wert des Zählers strikt positiv ist.

10. System zum zeitlichen Ordnen einer Mehrzahl von Meldungen, die jeweils von einer Mehrzahl von Quellen (SR1, SR2) stammen und für eine Mehrzahl von Adressaten-Anwendungsprozessen (MR, SL1, SL2) bestimmt sind, wobei jede Quelle eine Folge von Meldungen in zuverlässiger und geordneter Form verbreitet und jeder Adressaten-Anwendungsprozess in der Lage ist, ein gleiches Protokoll anzuwenden, um eine Folge von Meldungen in zuverlässiger und geordneter Form an alle Anwendungsprozesse zu verbreiten,
dadurch gekennzeichnet, dass, damit alle Adressaten-Anwendungsprozesse diese Meldungen in einer gleichen Reihenfolge empfangen, es umfaßt:
- Mittel zum Wählen einer Mehrzahl von als Relais-Prozesse bezeichneten Prozessen unter den Anwendungsprozessen, wobei für jede der Quellen (SR1, SR2) ein Anwendungsprozess (MR1, MR2) ausgewählt wird, der als Relais-Prozess für diese Quelle bezeichnet wird, wobei die anderen Anwendungsprozesse (SL1, SL2) als Slave-Prozesse für diese Quelle bezeichnet werden, wobei ein gleicher Anwendungsprozess als Relais-Prozess für mehrere Quellen gewählt werden kann, jede Quelle aber nur einen einzigen Relais-Prozess hat;
- und Mittel zum Weiterverbreiten der von einer Quelle an alle Anwendungsprozesse verbreiteten Meldungen in zuverlässiger und geordneter Form mit Hilfe des als Relais für die Quelle gewählten Anwendungsprozesses (MR1 bzw. MR2), wobei alle Relais-Prozesse (MR1, MR2) ein gleiches Protokoll zur zuverlässigen und geordneten Verbreitung anwenden;
- Mittel, um in dem Relais-Prozess (MR1 bzw. MR2) für eine Quelle die Daten aller Meldungen, die er direkt von dieser Quelle (SR1, SR2) empfängt, zu verarbeiten;
- und Mittel, um in den Slave-Prozessen (SL5, SL6) nur die Daten der über die Relais-Prozesse (MR3-MR4) empfangenen Meldungen (m7'-m8') zu verarbeiten, wobei die Daten der direkt von den Quellen kommend empfangenen Meldungen (m7, m8) nicht verarbeitet werden.

11. System nach Anspruch 10 dadurch gekennzeichnet, dass es zum Beheben einer Störung des aktuellen Relais-Prozesses (MR1 bzw. MR2) für eine Quelle (SR1, SR2) in jedem Slave-Prozess (SL5, SL6), der eine von einer Quelle, für die er Slave-Prozess ist, kommende Meldung empfängt, umfasst:
- Mittel zum Speichern (12) einer Meldung, wenn die gleiche Meldung nicht bereits von dem Slave-Prozess über den Relais-Prozess (MR3) für diese Quelle empfangen worden ist;
- Mittel zum anschließenden Löschen (22), wenn sie anschließend von dem Slave-Prozess über den Relais-Prozess (MR3) für diese Quelle empfangen wird;
- und Mittel (34, 35) zum Weiterverbreiten und anschließendem Löschen aller gespeicherten und noch nicht gelöschten Meldungen, wenn der aktuelle Relais-Prozess (MR1) eine Störung gehabt hat und der betreffende Slave-Prozess zum neuen Relais-Prozess für diese Quelle wird.

12. System nach Anspruch 10, dadurch gekennzeichnet, dass, um in jedem Slave-Prozess für eine Quelle zu bestimmen, ob eine von dieser Quelle verbreitete Meldung bereits von dem Slave-Prozess über den Relais-Prozess empfangen worden ist, bevor sie direkt von der Quelle kommend empfangen wurde, es umfasst:
- Mittel zum Dekrementieren (20) eines Zählers, der zu dem Slave-Prozess und dieser Quelle gehört, jedesmal, wenn der Slave-Prozess eine von der Quelle kommende Meldung über den Relais-Prozess für diese Quelle empfängt;
- Mittel zum Inkrementieren (10) dieses Zählers jedesmal, wenn der Slave-Prozess eine direkt von dieser Quelle kommende Meldung empfängt;
- und Mittel zum Feststellen, dass eine von einer Quelle verbreitete Meldung noch nicht von dem Slave-Prozess über den Relais-Prozess empfangen worden ist, wenn und nur wenn der algebraische Wert des Zählers strikt positiv ist.

## Claims

1. A method of ordering a plurality of messages from a plurality of sources (SR1, SR2) addressed to a plurality of receiving application processes (MR, SL1, SL2) able to process data from said messages, each source broadcasting a series of messages in a reliable and orderly manner and each receiving application process being capable of rebroadcasting a series of messages in a reliable and orderly manner to all said application processes, characterized in that, in order for all said receiving application processes to receive said messages in the same order, said method consists in:
- selecting from said application processes a single relay process (MR) common to all said sources, the other application processes (SL1, SL2) constituting slave processes;
- rebroadcasting all said messages broadcast by said sources from said relay process to all said application processes, including said relay process;
- processing in said relay process (MR) data from all messages (ml'-m2') that it rebroadcasts; and
- processing in said slave processes (SL1, SL2) only data from messages (ml'-m2') received via said relay process (MR), data from messages (ml, m2) received directly from said sources not being processed.

2. The method according to claim 1, characterized in that, in order to remedy failure of the current relay process (MR), said method consists in, in each slave process (SL1, SL2) receiving a message:
- storing (12) said message if said slave process has not received it already via said relay process;
- then deleting (22) it if said slave process subsequently receives it via said relay process (MR); and
- rebroadcasting then deleting all messages stored and not yet deleted if the current relay process (MR) has failed and if the slave process concerned becomes the new relay process common to all said sources.

3. The method according to claim 1, characterized in that, in order to determine in each slave process (SL1) if said slave process has already received a message (m3) broadcast by a source via said relay process (MR) before it receives it directly from said source, said method consists in:
- decrementing (20) a counter (C11) specific to said slave process (SL1) and to said source (SR1) each time that said slave process (SL1) receives a message from said source via said relay process;
- incrementing (10) said counter (C11) each time said slave process (SL1) receives a message from said source directly; and
- concluding that said slave process has not already received a message (m3) broadcast by a source via said relay process if and only if the algebraic value of said counter is positive.

4. A method of ordering a plurality of messages from a plurality of sources (SR1, SR2) addressed to a plurality of receiving application processes (MR, SL1, SL2), each source broadcasting a series of messages in a reliable and orderly manner and each receiving application process being capable of applying the same protocol to broadcast a series of messages in a reliable and orderly manner to all said application processes;
characterized in that, in order for all said receiving application processes to receive said messages in the same order, said method consists in:
- selecting from said application processes a plurality of relay processes, choosing for each of said sources (SR1, SR2) an application process (MR1, MR2) constituting the relay process for that source, the other application processes (SL1, SL2) constituting slave processes for that source, the same application process being a candidate for selection as the relay process for more than one source but each source having only one relay process;
- rebroadcasting in a reliable and orderly manner messages broadcast by said source to all said application processes using said application process (MR1 or MR2 respectively) chosen as the relay process for a source (SR1 or SR2 respectively), all said relay processes (MR1, MR2) applying the same reliable and orderly broadcast protocol;
- processing in said relay process (MR1 or MR2 respectively) for a source data from all messages that it receives directly from said source (SR1 or SR2 respectively); and
- processing in said slave processes (SL5, SL6) only data from messages (m7'-m8') received via said relay processes (MR3-MR4), data from messages (m7, m8) received directly from said sources not being processed.

5. The method according to claim 4, characterized in that, to remedy failure of the current relay process (MR1 or MR2 respectively) for a source (SR1 or SR2 respectively), the method consists in, in each slave process (SL5, SL6) receiving a message from a source for which it is a slave process:
- storing (12) it if said slave process has not already received the same message via said relay process (MR3) for said source;
- then deleting (22) it if said slave process receives it subsequently via said relay process (MR3) for said source; and
- rebroadcasting and then deleting all messages stored and not yet deleted if the current relay process has failed and if the slave process in question becomes the new relay process common to all said sources.

6. The method according to claim 4, characterized in that, for determining in each process that is a slave process for a source if a message broadcast by said source has already been received by said slave process via said relay process before it is received directly from said source, said method consists in:
- decrementing (20) a counter specific to said slave process and to said source each time that said slave process receives a message from said source via said relay process for said source;
- incrementing (10) said counter each time that said slave process receives a message from said source directly; and
- concluding that said slave process has not already received a message broadcast by a source via said relay process if and only if the algebraic value of said counter is positive.

7. System for ordering a plurality of messages from a plurality of sources (SR1, SR2) addressed to a plurality of receiving application processes (MR, SL1, SL2) capable of processing data from said messages, each source broadcasting a series of messages in a reliable and orderly manner and each receiving application process being capable of rebroadcasting a series of messages in a reliable and orderly manner to all said application processes, characterized in that, in order for all said receiving application processes to receive said messages in the same order, said system includes:
- means for choosing from said application processes a process (MR) constituting a relay process, of which there is one only for all said sources, the other application processes (SL1, SL2) constituting slave processes;
- means for rebroadcasting all messages broadcast by said sources from said relay process to all said application processes including said relay process;
- means for processing in said relay process (MR) data from all messages (m1'-m2') that it rebroadcasts; and
- means for processing in said slave processes (SL1, SL2) only data from messages (m1'-m2') received via said relay process (MR), data from messages (m1, m2) received directly from said sources not being processed.

8. The system according to claim 7, characterized in that, to remedy failure of the current relay process (MR), it includes in each slave process (SL1, SL2) receiving a message:
- means for storing (12) said message if said slave process has not already received it via said relay process;
- means for subsequently deleting (22) it if said slave process subsequently receives it via said relay process (MR); and
- means (34, 35) for rebroadcasting and then deleting all messages stored and not yet deleted if the current relay process (MR) fails and if the slave process concerned becomes the new relay process common to all said sources.

9. The system according to claim 7, characterized in that, in order to determine in each slave process (SL1) if said slave process has already received a message (m3) broadcast by a source via said relay process (MR) before receiving it directly from said source, said system includes:
- means for decrementing (20) a counter (C11) specific to said slave process (SL1) and to said source (SR1) each time that said slave process (SL1) receives a message from said source via said relay process;
- means for incrementing (10) said counter (C11) each time that said slave process (SL1) receives a message directly from said source; and
- means for concluding that said slave process has not already received a message (m3) broadcast by a source via said relay process if and only if the algebraic value of said counter is positive.

10. System for ordering a plurality of messages from a plurality of sources (SR1, SR2) addressed to a plurality of receiving application processes (MR, SL1, SL2), each source broadcasting a series of messages in a reliable and orderly manner and each receiving application process being capable of applying the same protocol to broadcast a series of messages in a reliable and orderly manner to all said application processes, characterized in that, in order for all said receiving application processes to receive said messages in the same order, said system includes:
- means for choosing from said application processes a plurality of processes constituting relay processes, choosing for each source (SR1, SR2) an application process (MR1, MR2) constituting a relay process for said source, the other application processes (SL1, SL2) constituting slave processes for said source, the same application process being a candidate for choice as the relay process for more than one source but each source having only one relay process;
- means for rebroadcasting in a reliable and orderly manner messages broadcast by said source to all said application processes using said application process (MR1 or MR2 respectively) chosen as the relay process for a source, all said relay processes (MRl, MR2) applying the same reliable and orderly broadcast protocol;
- means for processing in said relay process (MR1 or MR2 respectively) for a source data from all messages that it receives directly from said source (SR1 or SR2 respectively); and
- means for processing in said slave processes (SL5, SL6) only data from messages (m7'-m8') received via said relay processes (MR3-MR4), data from messages (m7, m8) received directly from said sources not being processed.

11. The system according to claim 10, characterized in that, in order to remedy failure of the current relay process (MR1 or MR2 respectively) for a source (SR1 or SR2 respectively), said system includes in each slave process (SL5, SL6) receiving a message from a source for which it is a slave process:
- means for storing (12) a message if said slave process has not received the same message already via said relay process (MR3) of said source;
- means for subsequently deleting (22) it if said slave process subsequently receives it via said relay process (MR3) for said source, and
- means (34, 35) for rebroadcasting and then deleting all messages stored and not yet deleted if the current relay process (MR1) fails and if the slave process concerned becomes the new relay process for said source.

12. The system according to claim 10, characterized in that, for determining in each slave process for a source if said slave process has already received a message broadcast by said source via said relay process before receiving it directly from said source, said system includes:
- means for decrementing (20) a counter specific to said slave process and to said source each time said slave process receives a message from said source via said relay process for said source;
- means for incrementing (10) said counter each time said slave process receives a message from said source directly; and
- means for concluding that said slave process has not already received a message broadcast by a source via said relay process if and only if the algebraic value of said counter is positive.
